# EUROPÄISCHE PATENTSCHRIFT

(11) **EP 3 523 115 B1**
(45) Veröffentlichungstag und Bekanntmachung des Hinweises auf die Patenterteilung: **09.09.2020**
(21) Anmeldenummer: 18733229.1
(22) Anmeldetag: 19.06.2018
(51) Int. Cl.: B29C 70/44, B30B 5/02, B29C 70/46, B29C 43/10, B29C 35/04, B64C 1/00

(54) **VERFAHREN UND VORRICHTUNG ZUM HERSTELLEN EINES BAUTEILS AUS EINEM FASERVERBUNDWERKSTOFF**
METHOD AND DEVICE FOR PRODUCING A COMPONENT FROM A FIBRE COMPOSITE MATERIAL
PROCÉDÉ ET DISPOSITIF SERVANT À LA FABRICATION D'UNE PIÈCE EN MATÉRIAU COMPOSITE RENFORCÉ PAR DES FIBRES

(30) Priorität: 20.06.2017 DE 102017113595
(43) Veröffentlichungstag der Anmeldung: 14.08.2019
(60) Teilanmeldung: 19172965.6
(73) Patentinhaber: Siempelkamp Maschinen- und Anlagenbau GmbH, 47803 Krefeld (DE)
(72) Erfinder: SCHOELER, Michael, 47509 Rheurdt (DE); SCHUERMANN, Klaus, 41464 Juechen (DE); SEBASTIAN, Lothar, 47239 Duisburg (DE)
(74) Vertreter: Michalski Hüttermann & Partner Patentanwälte mbB
(86) Internationale Anmeldenummer: PCT/EP2018/066283
(87) Internationale Veröffentlichungsnummer: WO 2018/234316

(56) Entgegenhaltungen:
- BE-A- 886 795
- US-A1- 2016 297 153

## Beschreibung

### Technisches Gebiet

Die Erfindung betrifft ein Verfahren zum Herstellen eines Bauteils aus einem Faserverbundwerkstoff mit dem Schritt Einbringen einer mit einer Matrix imprägnierten Faser auf eine zylinderartige Innenform eines zwischen der Innenform und einer zylinderartigen Außenform gebildeten Formraums. Die Erfindung betrifft zudem eine Vorrichtung zum Herstellen des Bauteils aus dem Faserverbundwerkstoff mit der zylinderartigen Innenform, auf der die mit der Matrix imprägnierte Faser aufgebracht ist.

### Hintergrund der Erfindung

Zu Faserverbundwerkstoffen gehörende Organobleche sind aus dem Stand der Technik bekannt und werden vor allem im Flugzeug- und Automobilbau verwendet, um gegenüber herkömmlichen Materialien bei vergleichbarer oder sogar besserer Steifigkeit wesentlich leichtere Bauteile zu erhalten. Derartige Organobleche weisen in der Regel ein Fasergewebe oder ein Fasergelege auf, welches in eine thermoplastische Kunststoffmatrix eingebettet ist, und liegen oftmals als Faser-Matrix-Halbzeuge Glas, Aramid oder Kohlenstoff als Faserwerkstoff. Da sich Organobleche in einfacher Weise mittels bekannter Methoden der Metallverarbeitung warm umformen lassen, resultieren im Vergleich zu konventionellen duroplastischen Faserverbundwerkstoffen kürzere Prozesszeiten.

Im Bereich des Flugzeugbaus werden in jüngster Zeit im Schnitt halbkreisförmige Rumpfsektionen aus Faserverbundwerkstoff als Unterschale und Oberschale einzeln vorgefertigt und in einer anschließenden Endmontage zu einem fertigen Flugzeugrumpf zusammengesetzt. Die Rumpfsektionen werden in der Regel mittels einer Innenform und einer Außenform in einer C-Rahmenpresse umgeformt.

US 2016/297 153 A1 beschreibt ein Verfahren zum Imprägnieren einer Faservorform mit einer Imprägnierungszusammensetzung umfassend ein Aufbringen einer Flüssigkeit auf eine Struktur, wobei die Struktur eine Kammer umfasst, in der eine Faservorform zum Imprägnieren vorliegt

BE 886 795 A beschreibt ein Verfahren und eine insbesondere zur Durchführung des Verfahrens geeignete Vorrichtung, zur Herstellung verstärkter Kunststoff-Harz-Gegenstände durch Pressen.

Bislang ist es jedoch noch nicht gelungen, komplette Rumpfhälften in einer solchen Presse herzustellen, da dafür eine Gesamtpresskraft von etwa 15.000 bis 20.000 Tonnen und demzufolge eine Presse mit einem Gesamtgewicht von etwa 10.000 Tonnen notwendig wäre, was angesichts dieser Größe einen Investitionsaufwand von geschätzt 100 Millionen EUR bedeuten würde. Zudem wäre bei Fertigung einer kompletten Flugzeugrumpfhälfte mittels einer solchen aus dem Stand der Technik bekannten Presse nicht gewährleistet, dass allseitig ein konstanter Konsolidierungsdruck auf die Flugzeugrumpfhälfte einwirkt. Zudem kann nicht sichergestellt werden, dass der Konsolidierungsdruck, beispielsweise an den Längsrändern der halbkreisförmigen Flugzeugrumpfhälften, eine ausreichend große oder überhaupt vorhandene Normalkomponente zum Bauteil aufweist.

### Beschreibung der Erfindung

Ausgehend davon ist es eine Aufgabe der vorliegenden Erfindung, ein Verfahren und eine Vorrichtung anzugeben, mittels dessen ein Bauteil aus einem Faserverbundwerkstoff, insbesondere eine Flugzeugrumpfhälfte, in besonders einfacher Weise herzustellen ist.

Die Aufgabe der Erfindung wird durch die Merkmale der unabhängigen Ansprüche gelöst. Vorteilhafte Ausgestaltungen sind in den Unteransprüchen angegeben.

Demnach betrifft die Erfindung ein Verfahren zum Herstellen eines Bauteils aus einem Faserverbundwerkstoff, mit den Schritten Einbringen einer mit einer Matrix imprägnierten Faser auf eine zylinderartige Innenform eines zwischen der Innenform und einer zylinderartigen Außenform insbesondere druckdicht gebildeten Formraums, Einbringen einer Trennmembran auf die mit der Matrix imprägnierten Faser derart, dass sich zwischen der Außenform und der Trennmembran eine sich entlang der Mantelfläche der Außenform erstreckende Kavität bildet, Beaufschlagen der Kavität mit einem Thermoöl mit einer Temperatur größer dem Schmelzpunkt der Matrix und mit einem Druck größer Umgebungsdruck derart, dass das Thermoöl mit dem Druck auf die Trennmembran einwirkt, insbesondere zum Erhalten des Bauteils. Nach einer bevorzugten Weiterbildung umfasst das Verfahren den weiteren Schritt Beaufschlagen der Kavität mit dem Thermoöl mit der Temperatur ≥ 250 °C, ≥ 300 °C oder ≥ 400 °C, derart, dass das Thermoöl mit dem Druck ≥ 20 bar, ≥ 30 bar oder ≥ 40 bar auf die Trennmembran einwirkt, und/oder, nach einer vorgegebenen Zeitspanne, Kühlen des Thermoöls auf eine Temperatur ≤ 150 °C, ≤ 200 °C oder ≤ 250 °C.

Gegenüber einem Umformverfahren mittels einer aus dem Stand der Technik bekannten Presse, beispielsweise einer C-Rahmenpresse mit ortsfester Innenform und sich ausschließlich in vertikaler Richtung verfahrbaren Außenform zum Generieren eines Pressdruck mit ausschließlicher Vertikalkomponente, zeichnet sich das vorgeschlagene Verfahren dadurch aus, dass der auf die Trennmembran und damit die mit insbesondere einer thermoplastischen Kunststoffmatrix getränkte Faser aufgrund des Thermoöls einwirkende Pressdruck an jeder Stelle der Trennmembran in Richtung der Normalen der Trennmembran und damit ebenso in Richtung der Normalen des zu erhaltenen Bauteils bzw. der mit der thermoplastischen Kunststoffmatrix getränkten Faser wirkt. Unter Bezugnahme auf die vorgenannte C-Rahmenpresse bedeutet dies, dass auf die mit der Matrix imprägnierte Faser nicht nur ein Pressdruck ausschließlich mit Vertikalkomponente wirkt, sondern, beispielsweise an seitlichen Längsrändern eines als Halbkreis ausgebildeten Formraums, ebenso ein Pressdruck mit teilweiser oder sogar ausschließlicher Horizontalkomponente einwirkt. Gegenüber einer bekannten Presse wird der zum Umformen notwendige Press- bzw. Konsolidierungsdruck jedoch nicht oder nur zum Teil durch die Presse sondern stattdessen vollständig oder zum Wesentlichen durch das Thermoöl bewirkt.

Das vorgeschlagene Verfahren ermöglicht somit in besonders einfacher Weise die mit der Matrix imprägnierte Faser unter Druck und Temperatur zu einem röhren- oder tonnenförmigen Bauteils umzuformen, um beispielsweise eine Flugzeugrumpfhälfte als Bauteil zu erhalten. Ausgehend von der Grundidee, Thermoöl als Druck- und Heizmedium in der Kavität zwischen Außenform und Trennmembran zu verwenden, lässt sich allseitig an der Trennmembran ein gleich großer Konsolidierungsdruck, eine gezielte und gleichmäßige Erwärmung der mit der Matrix imprägnierte Faser sowie ein rascher Thermoölaustausch zum Kühlen und Erhalten des Bauteils erreichen.

Innenform und Außenform können grundsätzlich eine beliebige Form aufweisen, insbesondere eine Negativform des zu erhaltenen Bauteils, als Zylinder und/oder im Querschnitt als Halbkreis oder halbkreisartig, wobei im Folgenden oftmals angenommen wird, dass Innenform und Außenform zum Herstellen eines Bauteils eines Flugzeugs, insbesondere eines Flugzeugrumpfes, einer Flugzeugrumpfhälfte oder einer tonnenförmigen Rumpfsektion eines Flugzeugs ausgebildet sind. Bevorzugt ist die Innenform konvex als Innenunterform und die Außenform konkav als Außenoberform ausgestaltet. Im Falle einer Presse kann die Innenform das Unterwerkzeug und die Außenform das Oberwerkzeug darstellen. Noch weiter bevorzugt schließen aufeinander aufliegende Innenform und Außenform an ihren Rändern druckdicht und/oder abdichtend ab und/oder liegen an ihren Rändern berührend aufeinander auf. In diesem Zusammenhang weist das Verfahren bevorzugt den weiteren Schritt Aufsetzen der Außenform auf die Innenform derart, dass Außenform und Innenform an ihren Rändern abdichtend zum Ausbilden des Formraums aufeinander aufliegen und/oder Fixieren und/oder Verspannen der aufeinander aufliegenden Außenform und Innenform gegeneinander, insbesondere mittels der Presse.

Während das Verfahren grundsätzlich mit beliebigen mit der Matrix imprägnierten Faser durchgeführt werden kann, sind die Fasern bevorzugt als Glasfasern, Aramidfasern und/oder Karbonfasern bzw. Kohlefasern ausgeführt. Ganz besonders bevorzugt ist die mit der thermoplastischen Kunststoffmatrix getränkte Faser als Faser-Matrix-Halbzeug, als Faserverbundwerkstoff und/oder als Organoblech ausgeführt, wobei diese Begriffe im Rahmen der Erfindung teils synonym verwendet werden. Die mit der Matrix imprägnierte Faser ist bevorzugt als eine mit einer thermoplastischem Kunststoffmatrix getränkte Faser und/oder als glasfaserverstärktes Aluminium, auch GLARE, als Hybridwerkstoff ausgeführt. Glasfaserverstärktes Aluminium weist in der Regel viele, jeweils nur wenige Zehntel Millimeter dicke Schichten auf, welche abwechselnd aus Aluminium und einem Glasfaserlaminat, beispielsweise glasfaserverstärkter Kunststoff, ausgeführt sind.

Die Faser kann ein sogenanntes Prepregmaterial umfassen und/oder als Tape ausgebildet sein. Bevorzugt wird die Faser als Endlosmaterial bereitgestellt. Bei der Matrix kann es sich um eine Epoxidharz- oder Thermoplastmatrix wie auch Mischungen derselben handeln. Beispielsweise kann die Matrix Polyphenylensulfid oder Polyetheretherketon als Thermoplaste umfassen, so dass in diesem Fall der Schmelzpunkt 285 °C bzw. 335 °C wäre. Bevorzugt ist die Temperatur wenigstens 10 °C, 20 °C, 50 °C, 100 °C oder 200 °C größer dem Schmelzpunkt. Ebenso lassen sich Polyamid oder Polyetherimid sowie Epoxide, Polyurethane oder Polyester als Duroplaste verwenden. Der Druck ist bevorzugt wenigstens 10 bar, 20 bar, 30 bar oder 40 bar größer dem Umgebungsdruck. Weiter bevorzugt wird die Faser vor dem Einbringen oder Ablegen in die Innenform mit der Matrix imprägniert und/oder getränkt. Im Rahmen der Erfindung, beispielsweise in der Figurenbeschreibung, werden die Begriffe mit der thermoplastischen Kunststoffmatrix getränkte Faser und mit der Matrix imprägnierte Faser synonym verwendet.

Weiter bevorzugt kann die mit der Matrix imprägnierte Faser als Fasergelege oder Gewebe ausgestaltet sein, bei dem Verstärkungsfasern in einer Kunststoffmatrix eingebettet sind. Ebenso kann ein Fadengelege als Faser vorgesehen sein, insbesondere als monoaxiales oder unidirektionales Fadengelege, welches durch Fixieren einer Schar von parallelen Fäden erhalten werden kann, als biaxiales Fadengelege, bei welchem zwei Scharen von parallelen Fäden in Richtung von zwei Achsen fixiert werden sind, oder als multiaxiales Fadengelege, bei dem mehrere Scharen aus parallelen Fäden in Richtung verschiedener Achsen fixiert werden. Gegenüber Geweben zeichnen sich Gelegen durch eine höhere Festigkeit bedingt durch Wegfall der bei Geweben unvermeidbaren Ondulation aus. Ferner kann bei Geweben eine Mehrzahl von Bindungsarten wie Leinenbindung oder Köperbindung beinhaltet sein.

Bevorzugt wird die Kavität mit dem Thermoöl mit der Temperatur ≥ 300 °C, ≥ 350 °C, ≥ 400 °C oder ≥ 500 °C beaufschlagt. Das Thermoöl wirkt bevorzugt mit dem Druck von ≥ 30 bar, ≥ 40 bar oder ≥ 50 bar auf die Trennmembran ein. Die vordefinierte Zeitspanne kann 1 Minute, 10 Minuten, 1 Stunde oder 5 Stunden umfassen. Beim Kühlen des Thermoöls zum Aushärten des Bauteils hat das Thermoöl bevorzugt eine Temperatur von ≤ 150 °C oder ≤ 100 °C. Ganz besonders bevorzugt wird zum Erhitzen bzw. Aufschmelzen des Organoblechs, also beim Beaufschlagen der Kavität mit dem Thermoöl mit der Temperatur größer dem Schmelzpunkt der Matrix und beim darauffolgenden Kühlen des Organoblechs das gleiche Thermoöl verwendet. Mit anderen Worten wird das in der Kavität befindliche Thermoöl bevorzugt während eines Pumpvorgangs gekühlt und wiederum der Kavität zugeführt, während das Thermoöl weiterhin mit dem Druck ≥ 20 bar auf die Trennmembran einwirkt.

Nach einer bevorzugten Weiterbildung umfasst das Verfahren den Schritt Vorheizen der Außenform und/oder der Innenform auf eine Grundtemperatur, insbesondere vor dem Einbringen der mit der Matrix imprägnierten Faser. Dazu können in der Außenform und/oder der Innenform Heiz- und/oder Kühlkanäle zum Temperieren der jeweiligen Form vor und/oder während des Aushärtens vorgesehen sein. Die Heizkanäle und/oder Kühlkanäle verlaufen bevorzugt in axialer Richtung in regelmäßigen Abständen und/oder verteilt über die gesamte Mantelfläche der jeweiligen Form. Zum Beaufschlagen der Kavität mit dem Thermoöl sind bevorzugt Zuführkanäle für das Thermoöl vorgesehen, welche sich in radialer Richtung durch die Außenform hindurch erstrecken.

Nach einer noch weiter bevorzugten Ausgestaltung umfasst das Verfahren den Schritt Beaufschlagen der Mantelfläche der Innenform mit einem Unterdruck. Bevorzugt ist die Innenform in regelmäßigen Abständen entlang der Mantelfläche mit einer Mehrzahl Unterdruckkanäle versehen, die sich in radialer Richtung durch die Unterform hindurch erstrecken können und/oder mit einer Vakuumpumpe verbunden sind, durch die der Unterdruck erzeugbar ist. In analoger Weise kann eine Heiz- und/oder Kühleinrichtung vorgesehen sein, um die Außenform und/oder die Innenform mittels der Heiz- und/oder Kühlkanäle auf die Grundtemperatur vorzuheizen bzw. zu kühlen.

Nach einer noch weiter bevorzugten Ausgestaltung umfasst das Verfahren den Schritt Einbringen eines Stringers, eines Spants und/oder einer Aufdickung in eine Aussparung der Innenform, insbesondere vor dem Einbringen der mit der Matrix imprägnierten Faser. Stringer, Spanten bzw. Aufdickungen können lokale Verstärkungen, beispielsweise für Fenster-, Türen- und/oder Klappenöffnungen bei einem Flugzeug, und/oder Strukturaussteifungen darstellen, die durch den vorgeschlagenen Verfahrensschritt beim Herstellen des Formteils mit eingebracht werden können. Beim Aufschmelzen des Organoblechs durch Beaufschlagen der Kavität mit dem Thermoöl mit der Temperatur größer dem Schmelzpunkt der Matrix werden Verbindungskontaktflächen der Stringer, Spanten bzw. Aufdickungen aufgeschmolzen und derart mit dem Organoblech verbunden. Die Aussparung ist bevorzugt derart beispielsweise durch einen Fräsvorgang ausgestaltet, dass bei in die Aussparung eingelegtem Stringer, Spant bzw. Aufdickung dieser bündig mit der Mantelfläche der Innenform abschließt. Der Stringer, der Spant bzw. die Aufdickung wird bevorzugt als vorgefertigtes und konsolidiertes Bauteil in die Aussparung eingesetzt.

Nach einer bevorzugten Weiterbildung umfasst das Verfahren den Schritt Kühlen der Innenform auf eine Temperatur ≤ 150 °C, ≤ 200 °C oder ≤ 250 °C oder nach dem vorhergehenden Schritt Kühlen der Innenform auf eine Temperatur ≤ 150 °C, ≤ 200 °C oder ≤ 250 °C im Bereich des Stringers, des Spants und/oder der Aufdickung. Bevorzugt sind dazu im Bereich des Stringers, des Spants und/oder der Aufdickung eine Mehrzahl sich axial durch die Innenform erstreckende Zuführkanäle vorgesehen, die sich um die Aussparung herum anordnen. Derart lässt sich sicherstellen, dass der in der Aussparung vorgesehene Stringer, Spant und/oder die Aufdickung durch das erhitzte Thermoöl bedingt zwar an der jeweiligen Verbindungskontaktfläche aufschmilzt der verbleibende Teil des Stringers, des Spants bzw. der Aufdickung jedoch unterhalb einer Aufweichungstemperatur verbleibt.

Grundsätzlich existieren verschiedene Möglichkeiten, die Trennmembran auszugestalten. Nach einer besonders bevorzugten Weiterbildung ist vorgesehen, dass die Trennmembran aus Metall ausgeführt und/oder an der Außenform befestigt ist. Die Trennmembran dient der Trennung von Thermoöl und Organoblech einerseits sowie andererseits zur Ausbildung der Kavität zum Aufnehmen des Thermoöls. Eine Trennmembran aus Metall zeichnet sich durch eine besonders gute Wärmeleitung und andererseits Druckübertragung aus.

Nach einer bevorzugten Weiterbildung umfasst das Verfahren den Schritt Einbringen einer Trennfolie zwischen der mit der Matrix imprägnierten Faser und der Trennmembran. Bevorzugt wird die Trennfolie vor dem Einbringen der Trennmembran und nach dem Einbringen der mit der Matrix imprägnierten Faser eingebracht. Die Trennfolie wirkt als Antihaftschicht und ermöglicht, nach dem Kühlen der mit der Matrix imprägnierten Faser, ein einfaches Lösen der Trennmembran von der mit der Matrix imprägnierten Faser.

Um nach dem Kühlen die ausgehärtete mit der Matrix imprägnierte Faser ebenso einfach von der Innenform lösen zu können, umfasst das Verfahren nach einer weiteren bevorzugten Ausgestaltung den Schritt Aufbringen insbesondere Sprühen eines Trennmittels auf die Innenform und/oder die Außenform vor dem Einbringen der mit der Matrix imprägnierte Faser.

Nach einer bevorzugten Weiterbildung ist eine die Innenform und die Außenform aufweisende Presse vorgesehen, insbesondere eine C-Rahmenpresse, und/oder das Verfahren den Schritt, nach dem Einbringen der Trennmembran, Verspannen der Innenform und der Außenform gegeneinander, bis dass der Formraum ausgebildet ist, aufweist. Außenform und Innenform sind bevorzugt ausgeführt, dass der Formraum nach dem Verspannen druckdicht ist. Die Presse weist bevorzugt ein Pressengestell auf, insbesondere ein C-Gestell, welches einen oberen horizontalen C-Schenkel, einen unteren horizontalen C-Schenkel und eine vertikale C-Basis aufweist, die den oberen C-Schenkel und den unteren C-Schenkel miteinander verbindet.

Die Innenform ist bevorzugt ortsfest an dem unteren horizontalen C-Schenkel als Unterwerkzeug und die Außenform über einen Presszylinder an dem oberen C-Schenkel als Oberwerkzeug derart abgestützt, dass durch Betätigen des Presszylinders die Innenform und die Außenform gegeneinander verspannt werden können, bis dass der Formraum ausgebildet ist. Das C-Gestell ist bevorzugt in Rahmenbauweise ausgeführt, wobei in Längsrichtung hintereinander mehrere C-förmig ausgebildete und miteinander verbundene Pressenrahmen vorgesehen sein können. Die einzelnen Pressenrahmen sind bevorzugt mit Spannelementen miteinander verbunden. Neben einer zuvor beschriebenen Oberkolbenpresse, bei der der Presszylinder an dem oberen C-Schenkel abgestützt ist, kann die Presse ebenso in Unterkolben-Bauweise ausgeführt sein, so dass die Innenform durch die Presszylinder gegen die an dem oberen C-Schenkel vorgesehene Außenform verspannbar ist.

Die Aufgabe der Erfindung wird weiterhin durch eine Vorrichtung zum Herstellen eines Bauteils aus einem Faserverbundwerkstoff gelöst, mit einer zylinderartigen Innenform, auf der eine mit einer Matrix imprägnierte Faser aufgebracht ist, einer Trennmembran, die auf der mit der Matrix imprägnierte Faser aufgebracht ist, einer zylinderartigen Außenform, die auf der Innenform mit der darauf aufgebrachten mit der Matrix imprägnierte Faser und der Trennmembran derart abdichtend aufliegt, dass entlang der Mantelfläche der Außenform eine insbesondere druckdichte Kavität gebildet ist, und einer Thermoöltemperier- und Druckeinrichtung, welche ausbildet ist, die Kavität mit einem Thermoöl mit einer Temperatur größer dem Schmelzpunkt der Matrix und einem Druck größer Umgebungsdruck derart zu beaufschlagen, dass das Thermoöl mit dem Druck auf die Trennmembran einwirkt. Bevorzugt ist die Thermoöltemperier- und Druckeinrichtung ausbildet, die Kavität mit dem Thermoöl mit der Temperatur ≥ 250 °C, ≥ 300 °C oder ≥ 400 °C derart zu beaufschlagen, dass das Thermoöl mit dem Druck ≥ 20 bar, ≥ 30 bar oder ≥ 40 bar auf die Trennmembran einwirkt, und/oder, nach einer vorgegebenen Zeitspanne, das Thermoöl auf eine Temperatur ≤ 150 °C, ≤ 200 °C oder ≤ 250 °C zu kühlen.

Durch die vorgeschlagene Vorrichtung lassen sich Halbschalen eines Flugzeugrumpfes in sogenannter "Baguette"-Bauweise herstellen, indem zum einen eine Oberschale und zum anderen eine Unterschale eines solchen Flugzeugrumpfes nacheinander in der Vorrichtung hergestellt werden. Die insbesondere mit einer thermoplastischen Kunststoffmatrix getränkte Faser wird, eingebettet zwischen der Innenform und der Außenform, durch das Thermoöl einerseits erhitzt und andererseits mit Druck beaufschlagt, so dass nach dem darauf folgenden Abkühlen als Bauteil beispielsweise das Flugzeugrumpfteil erhalten wird. Die Vorrichtung kann als Presse ausgestaltet sein, um ein präzises Bewegen, das heißt Öffnen und Schließen, der Innenform und Außenform zu erreichen. Die Innenform und die Außenform sind bevorzugt ausgestaltet, dass bei geschlossener Presse die Formen an ihren Rändern berührend aufeinander aufliegen und derart den durch die Formen gebildeten Formraum abdichtend abschließen. Ebenso können Innenform und Außenform mit Spannseilen umwickelt oder anderweitig fixiert werden, um den Formraum auszubilden.

Nach einer bevorzugten Weiterbildung des vorbeschriebenen Verfahrens oder der Vorrichtung wird die Kavität derart mit dem Thermoöl beaufschlagt, dass das Thermoöl auf die gesamte Trennmembran mit dem Druck größer Umgebungsdruck, ≥ 20 bar, ≥ 30 bar oder ≥ 40 bar einwirkt, und/oder beim Kühlen des Thermoöls der Druck auf die Trennmembran weiterhin größer Umgebungsdruck, ≥ 20 bar, ≥ 30 bar oder ≥ 40 bar ist. In diesem Zusammenhang ist weiter bevorzugt, dass die Kavität zwischen der Außenform und der Trennmembran entlang der Mantelfläche eine Dicke von ≥ 1 mm und ≤ 10 mm, insbesondere ≥ 2 mm und ≤ 5 mm, aufweist und/oder die Kavität an jeder Stelle der Trennmembran eine gleich große Dicke aufweist. Derart lässt sich erreichen, dass an jeder Stelle auf die mit der Matrix imprägnierte Faser ein gleich großer oder annähernd gleich großer Druck ausgeübt wird, der im Wesentlichen in Richtung der jeweiligen Normalen der Trennmembran, der mit der Matrix imprägnierte Faser und/oder der Mantelfläche der Innenform wirkt.

Da sowohl beim Aufschlagen des Thermoöls mit der Temperatur größer dem Schmelzpunkt, ≥ 250 °C, ≥ 300 °C oder ≥ 400 °C sowie beim darauf folgenden Kühlen des Thermoöls auf ≤ 150 °C, ≤ 200 °C oder ≤ 250 °C der Druck größer Umgebungsdruck, ≥ 20 bar, ≥ 30 bar oder ≥ 40 bar beträgt, existiert während des Umformens bevorzugt keine drucklose Phase. Die insbesondere mit der thermoplastischen Kunststoffmatrix getränkte Faser weist bevorzugt eine vergleichbare Dicke wie die Kavität auf, so dass das Thermoöl aufgrund seiner wesentlich höheren thermischen Kapazität ausreicht, um den Schmelzvorgang zum Umformen der insbesondere mit der thermoplastischen Kunststoffmatrix getränkten Faser herbeizuführen. Die Thermoöltemperier- und Druckeinrichtung weist bevorzugt eine Heizeinrichtung, eine Kühleinrichtung und/oder eine Pumpe auf, um das Thermoöl auf die vorgenannten Temperaturen zu erhitzen bzw. zu kühlen, das in die Kavität eingeführte, erhitzte Thermoöl abzupumpen, abzukühlen und wiederum in die Kavität gekühlt einzuführen, und/oder um den vorgenannten Druck aufzubauen.

Nach einer bevorzugten Weiterbildung des vorbeschriebenen Verfahrens oder der Vorrichtung umfasst die mit der Matrix imprägnierte Faser eine vorkonsolidierte Halbzeugschale und/oder vorkonsolidierte Einzellagen. Die insbesondere mit der thermoplastischen Kunststoffmatrix getränkte Faser kann zudem ein Fasergewebe und/oder ein Fasergelege umfassen, die in die thermoplastische Kunststoffmatrix eingebettet sind. Bei Geweben und Gelegen können Fasern rechtwinkelig zueinander verlaufen, um mechanische Eigenschaften wie Steifigkeit, Festigkeit und/oder Wärmeausdehnung gegenüber als aus dem Stand der Technik bekannten Materialien wie Metallblechen besser zu definieren.

Zur Ausgestaltung der Innenform und/oder der Außenform existieren grundsätzlich verschiedene Möglichkeiten. Die Innenform und/oder Außenform sind aus Invar ausgestaltet. Nach einer besonders bevorzugten Weiterbildung des vorbeschriebenen Verfahrens sowie der Vorrichtung weist die Innenform und/oder die Außenform eine Zylinderhöhe bzw. eine Längserstreckung von ≥ 10 m und ≤ 50 m, insbesondere ≥ 10 m und ≤ 15 m, und/oder einen Zylinderdurchmesser bzw. eine Quererstreckung von ≥ 3 m und ≤ 10 m, insbesondere 6 m, auf. Invar ist eine Eisen-Nickel-Legierung mit einem sehr geringen Wärmeausdehnungskoeffizienten, so dass sich eine so gestaltete Innenform und/oder Außenform durch eine äußerst geringe Ausdehnung aufgrund der durch das Thermoöl hervorgerufenen Temperaturänderung auszeichnet. Bei vorgenannter Dimensionierung der Innenform und/oder der Außenform lassen sich mittels des vorgeschlagenen Verfahrens bzw. der vorgeschlagenen Vorrichtung Flugzeugrumpfhälften und/oder tonnenförmige Rumpfsektionen eines Flugzeugs ausbilden, die bei einer Materialdicke von 2 mm einen Durchmesser von beispielsweise 6 m und eine Länge, als Zylinderhöhe, von 15 m aufweisen.

In diesem Zusammenhang ist nach einer bevorzugten Weiterbildung bevorzugt, dass die Innenform und/oder die Außenform ausgebildet ist, ein Flugzeugrumpf, ein Flugzeugflügel oder ein Flugzeugpropeller auszuformen. Die Innenform und/oder die Außenform sind dazu bevorzugt als Negativform ausgebildet, wobei ein vollständiger Flugzeugrumpf als Oberschale und Unterschale oder in Rumpfsektionen, die in einem nachfolgenden Fertigungsschritt zusammenzufügen sind, ausgebildet werden können.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: eine Vorrichtung zum Durchführen des Verfahrens zum Herstellen eines Bauteils aus einem Faserverbundwerkstoff gemäß einem bevorzugten Ausführungsbeispiel der Erfindung in einer schematischen Perspektivansicht, und
- Fig. 2: einen Ausschnitt der in Fig. 1 gezeigten Vorrichtung mit Innenform und Außenform in einer schematischen Schnittansicht.

### Detaillierte Beschreibung der Ausführungsbespiele

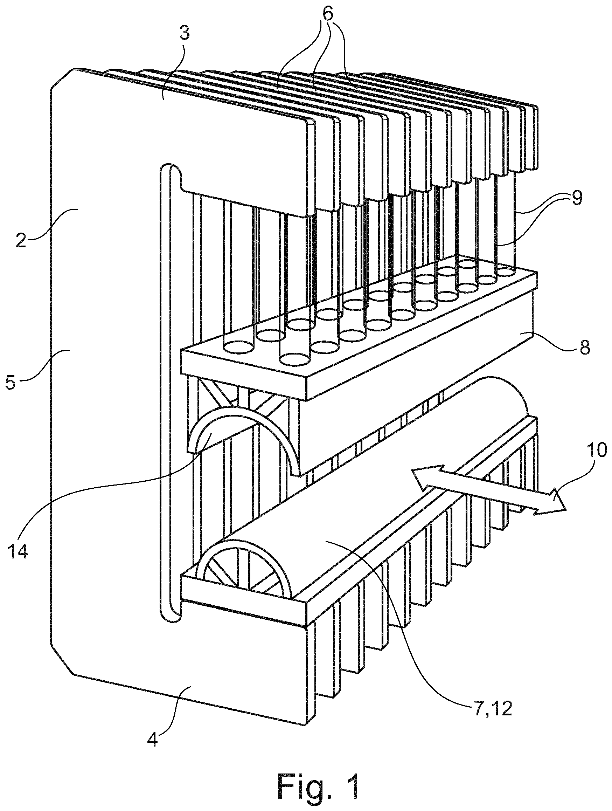

Fig. 1 zeigt eine Vorrichtung in Form einer C-Rahmenpresse zum Ausführen eines Verfahrens zum Herstellen eines Bauteils eines Flugzeugs aus Organoblech als Faserverbundwerkstoff. Die C-Rahmenpresse weist ein als C-Gestell 2 ausgestaltetes Pressengestell mit einem oberen horizontalen C-Schenkel 3, einem unteren horizontalen C-Schenkel 4 sowie einer vertikalen C-Basis 5 auf, die den oberen C-Schenkel 3 und den unteren C-Schenkel 4 miteinander verbindet. Die Presse ist in Rahmenbauweise ausgeführt und weist eine Mehrzahl in Längsrichtung der Presse hintereinander angeordneten und jeweils C-förmig ausgebildeten und miteinander verbundenen Pressenrahmen 6 auf.

Auf den unteren C-Schenkel 4 aufgestützt ist eine zylinderartige Innenform 7 vorgesehen. Die Innenform 7 ist konvex ausgeführt und im Querschnitt halbkreisartig mit einem Zylinderdurchmesser von 6 m ausgestaltet. In Längsrichtung erstreckt sich die Innenform 7 zwischen ihren Enden mit einer Zylinderhöhe von 15 m. Oberhalb der Innenform 7 ist eine zu der Innenform 7 kongruente also ebenso zylinderartige und entsprechend konkav ausgeführte Außenform 8 vorgesehen. Mehrere Presszylinder, angedeutet durch Pfeile 9, sind an den oberen C-Schenkeln 3 abgestützt und wirken auf die Außenform 8 ein. Derart lässt sich die Außenform 8 durch die Presszylinder im Sinne eines Laufholms in vertikale Richtung, angedeutet durch Pfeile 9, bewegen, um das Bauteil 1 aus der so ausgestalteten Vorrichtung herauszunehmen, angedeutet durch Pfeil 10.

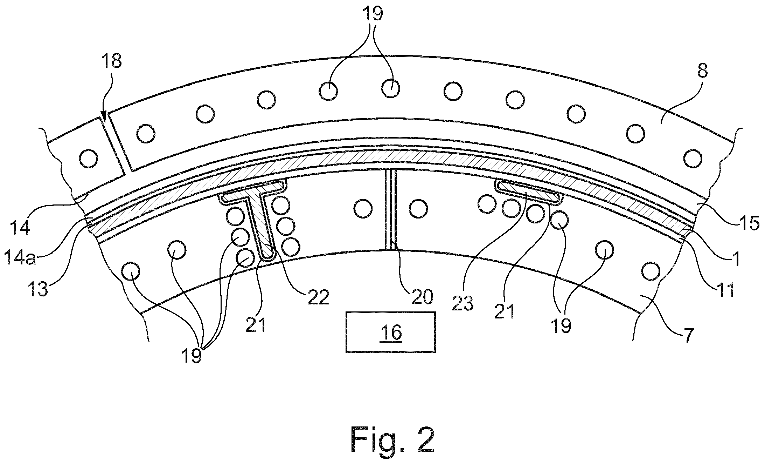

Unter Verweis auf den in Fig. 2 dargestellten Ausschnitt von aufeinander aufliegender Innenform 7 und Außenform 8 als schematische Schnittansicht wird zunächst in der in Fig. 1 gezeigten Situation, in der die Außenform 8 beabstandet zu der Innenform 7 ist, ein Trennmittel 10, angedeutet in Fig. 2, auf die Innenform 7 aufgesprüht. Daraufhin wird eine mit einer thermoplastischen Kunststoffmatrix getränkte Faser, insbesondere eine Glasfaser, Aramidfaser und/oder Kohlefaser, als vorkonsolidierte Halbzeugschale oder in vorkonsolidierten Einzellagen als sogenanntes Organoblech auf die Innenform 7 aufgebracht, so dass das Organoblech 7 die gesamte Mantelfläche 12 der zylinderartigen Innenform 7 bis zu den Rändern der Innenform 7 bedeckt.

In einem optionalen Schritt wird eine Trennfolie 13 als Antihaftschicht auf die mit der thermoplastischen Kunststoffmatrix getränkten Faser 1 aufgebracht. Die Trennfolie 13 wird wiederum mit einer Trennmembran 14 aus Metall bedeckt, welche ebenso die komplette Mantelfläche 12 der Innenform 7 bedeckt.

Daraufhin wird die Außenform 8, wie in Fig. 2 gezeigt, derart über der Innenform 7 angeordnet, dass sich zwischen der Mantelfläche 14 der Außenform 8 eine Kavität 15 ausbildet. Die Kavität erstreckt sich derart über die gesamte Mantelfläche 14 der Außenform 8 und weist eine annähernd gleichbleibende Dicke zwischen 2 und 5 mm auf. Innenform 7 und Außenform 8 sind aus Invar Eisen-Nickel-Legierung ausgeführt und ausgestaltet, dass, wenn die Außenform 8 wie in Fig. 2 gezeigt auf der Innenform 7 unter Ausbildung der Kavität 15 aufliegt, Innenform 7 und Außenform 8 an den Rändern ihrer jeweiligen Mantelflächen 12, 14 abdichtend abgeschlossen sind bzw. berührend aufeinander aufliegen.

Die Vorrichtung weist eine Thermoöltemperier- und Druckeinrichtung 16 auf, welche zum einen ausgebildet ist, die Kavität 15 mit einem Thermoöl 17 mit einer Temperatur > 400 °C zu beaufschlagen, so dass aufgrund des Thermoöls 17 ein Druck von etwa 40 bar auf die Trennmembran ausgeübt wird. Da sich das Thermoöl 17 innerhalb der Kavität 15 entlang der gesamten Mantelfläche 14 der Außenform 8 frei verteilen kann, wirkt an jeder Stelle der Trennmembran 14a der Druck von 40 bar in Richtung der Normalen der Mantelfläche 12 der Innenform 7 bzw. zur Erstreckungsrichtung der mit der thermoplastischen Kunststoffmatrix getränkten Faser 1.

Das Thermoöl 17 dient also als Druck- und Heizmedium, um allseitig über die Trennmembran 14a einen gleich bleibenden Konsolidierungsdruck auf die mit der thermoplastischen Kunststoffmatrix getränkten Faser auszuüben sowie um eine gezielte, gleichmäßige Erwärmung der mit der thermoplastischen Kunststoffmatrix getränkten Faser 1. Durch das Thermoöl mit seiner gegenüber mit der thermoplastischen Kunststoffmatrix getränkten Faser 1 wesentlich höheren thermischen Kapazität wird derart der Schmelzvorgang des mit der thermoplastischen Kunststoffmatrix getränkten Faser herbeigeführt. Nach einer vorgegeben Zeitspanne wird das Thermoöl 17 durch die Thermoöltemperier- und Druckeinrichtung 16 auf eine Temperatur < 200 °C bei gleich bleibendem Druck abgekühlt, um das Bauteil 1 zu erhalten.

Zum Einbringen des Thermoöls 17 in die Kavität 15 sind in der Außenform 8 verschiedene Zuführkanäle 18 vorgesehen, die sich radial durch die Außenform 8 hindurch erstrecken. Zum Heizen bzw. Kühlen sind in der Innenform 7 sowie in der Außenform 8 sich axial erstreckende Heiz- und/oder Kühlkanäle 19 vorgesehen, wodurch eine Vorheizung, Kühlung und/oder Temperaturführung der entsprechenden Form möglich ist. Durch einen in der Innenform 7 vorgesehenen, sich radial durch die Innenform 7 erstreckenden Vakumierkanal 20 lässt sich die Mantelfläche 12 der Innenform 7 mit Unterdruck beaufschlagen.

In der Innenform 7 sind Aussparungen 21 vorgesehen, in die, wie aus Fig. 2 zu erkennen ist, ein Stringer 22, links, sowie eine Aufdeckung 23, rechts, eingebracht sind. Angrenzend an die jeweiligen Aussparungen 21 sind mehrere Kühlkanäle 19 angeordnet, die die jeweilige Aussparung 19 umgrenzen. Während Verbindungskontaktflächen des Stringers 22 bzw. der Aufdeckung 23 durch das Thermoöl 17 aufschmelzen und sich mit der mit der thermoplastischen Kunststoffmatrix getränkten Faser 1 verbinden können, dienen die um die Aussparung 21 herum angeordneten Kühlkanäle 19 zur Kühlung des Stringers 22 bzw. der Aufdeckung 23, damit diese unter einer Aufweichungstemperatur verbleiben.

Nach Aushärten des Formteils 1 lässt sich, wie in Fig. 1 gezeigt, die Außenform 8 anheben und das Formteil 1 aus dem durch Innenform 7 und Außenform 8 gebildeten Formraum entnehmen. Innenform 7 und Außenform 8 können ausgestaltet sein, eine Flugzeugrumpfhälfte auszuformen, wie in Fig. 1 gezeigt, wobei es jedoch ebenso möglich ist, jegliche anderen Teile, beispielsweise ein Flugzeugflügel oder einen Flugzeugpropeller mittels des vorgeschlagenen Verfahrens sowie der Vorrichtung in besonders einfacher Weise auszuformen.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Bauteil, mit einer Matrix imprägnierte Faser | 1 |
| C-Gestell | 2 |
| Oberem C-Schenkel | 3 |
| Unteren C-Schenkel | 4 |
| C-Basis | 5 |
| Pressenrahmen | 6 |
| Innenform | 7 |
| Außenform | 8 |
| Pfeile | 9 |
| Pfeil | 10 |
| Trennmittel | 11 |
| Mantelfläche (der Innenform) | 12 |
| Trennfolie | 13 |
| Mantelfläche (der Außenform) | 14 |
| Trennmembran | 14a |
| Kavität | 15 |
| Thermoöltemperier- und Druckeinrichtung | 16 |
| Thermoöl | 17 |
| Zuführkanal | 18 |
| Heiz- und/oder Kühlkanal | 19 |
| Vakumierkanal | 20 |
| Aussparung | 21 |
| Stringer | 22 |
| Aufdickung | 23 |

## Patentansprüche

1. Verfahren zum Herstellen eines Bauteils (1) aus einem Faserverbundwerkstoff, mit den Schritten:
Einbringen einer mit einer Matrix imprägnierten Faser (1) auf eine zylinderartige Innenform (7) eines zwischen der Innenform (7) und einer zylinderartigen Außenform (8) gebildeten Formraums, wobei die Innenform (7) und/oder die Außenform (8) aus Invar ausgestaltet ist,
Einbringen einer Trennmembran (14a) auf die mit der Matrix imprägnierten Faser (1) derart, dass sich zwischen der Außenform (8) und der Trennmembran (14a) eine sich entlang der Mantelfläche (14) der Außenform (8) erstreckende Kavität (15) bildet, und
Beaufschlagen der Kavität (15) mit einem Thermoöl (17) mit einer Temperatur größer dem Schmelzpunkt der Matrix und mit einem Druck größer Umgebungsdruck derart, dass das Thermoöl (17) mit dem Druck auf die Trennmembran (14a) einwirkt.

2. Verfahren nach dem vorhergehenden Anspruch, mit dem Schritt:
Beaufschlagen der Kavität (15) mit dem Thermoöl (17) mit der Temperatur ≥ 250 °C, ≥ 300 °C oder ≥ 400 °C, derart, dass das Thermoöl (17) mit dem Druck ≥ 20 bar, ≥ 30 bar oder ≥ 40 bar auf die Trennmembran (14a) einwirkt, und/oder,
nach einer vorgegebenen Zeitspanne, Kühlen des Thermoöls (17) auf eine Temperatur ≤ 150 °C, ≤ 200 °C oder ≤ 250 °C.

3. Verfahren nach einem der vorhergehenden Ansprüche, mit dem Schritt
Vorheizen der Außenform (8) und/oder der Innenform (7) auf eine Grundtemperatur, insbesondere vor dem Einbringen der mit der Matrix imprägnierten Faser (1), und/oder
Beaufschlagen der Mantelfläche (12) der Innenform (7) mit Unterdruck.

4. Verfahren nach einem der vorhergehenden Ansprüche, mit dem Schritt Einbringen eines Stringers (22), eines Spants und/oder einer Aufdickung (23) in eine Aussparung der Innenform (7), insbesondere vor dem Einbringen der mit der Matrix imprägnierten Faser (1).

5. Verfahren nach einem der vorhergehenden Ansprüche mit dem Schritt Kühlen der Innenform (7) auf eine Temperatur ≤ 150 °C, ≤ 200 °C oder ≤ 250 °C oder nach einem Verfahren nach dem vorhergehenden Anspruch mit dem Schritt Kühlen der Innenform (7) auf eine Temperatur ≤ 150 °C, ≤ 200 °C oder ≤ 250 °C im Bereich des Stringers (22), des Spants und/oder der Aufdickung (23).

6. Verfahren nach einem der vorhergehenden Ansprüche, wobei die Trennmembran (14a) aus Metall ausgeführt und/oder an der Außenform (8) befestigt ist.

7. Verfahren nach einem der vorhergehenden Ansprüche, mit dem Schritt
Einbringen einer Trennfolie (13) zwischen der mit der Matrix imprägnierten Faser (1) und der Trennmembran (14a), und/oder
Aufbringen insbesondere Sprühen eines Trennmittels (11) auf die Innenform (7) und/oder die Außenform (8) vor dem Einbringen der mit der Matrix imprägnierten Faser (1).

8. Verfahren nach einem der vorhergehenden Ansprüche, mit einer die Innenform (7) und die Außenform (8) aufweisenden Presse, insbesondere einer C-Rahmenpresse (6), und/oder dem Schritt, nach dem Einbringen der Trennmembran (14a), Verspannen der Innenform (7) und der Außenform (8) gegeneinander, bis dass die Kavität (15) ausgebildet ist.

9. Vorrichtung zum Herstellen eines Bauteils (1) aus einem Faserverbundwerkstoff, mit
einer zylinderartigen Innenform (7), auf der eine mit einer Matrix imprägnierten Faser (1) aufgebracht ist,
einer Trennmembran (14a), die auf der mit der Matrix imprägnierten Faser (1) aufgebracht ist,
einer zylinderartigen Außenform (8), die auf der Innenform (7) mit der darauf aufgebrachten mit der Matrix imprägnierten Faser (1) und der Trennmembran (14a) derart abdichtend aufliegt, dass entlang der Mantelfläche (14) der Außenform (8) eine Kavität (15) gebildet ist, und
einer Thermoöltemperier- und Druckeinrichtung (16), welche ausbildet ist, die Kavität (15) mit einem Thermoöl (17) mit einer Temperatur größer dem Schmelzpunkt der Matrix und mit einem Druck größer Umgebungsdruck derart zu beaufschlagen, dass das Thermoöl (17) mit dem Druck auf die Trennmembran (14a) einwirkt, wobei
die Innenform (7) und/oder die Außenform (8) aus Invar ausgestaltet ist.

10. Vorrichtung nach dem vorhergehenden Anspruch, wobei die Thermoöltemperier- und Druckeinrichtung (16) ausbildet ist, die Kavität (15) mit dem Thermoöl (17) mit der Temperatur ≥ 250 °C, ≥ 300 °C oder ≥ 400 °C derart zu beaufschlagen, dass das Thermoöl (17) mit dem Druck ≥ 20 bar, ≥ 30 bar oder ≥ 40 bar auf die Trennmembran (14a) einwirkt, und/oder, nach einer vorgegebenen Zeitspanne, das Thermoöl (17) auf eine Temperatur ≤ 150 °C, ≤ 200 °C oder ≤ 250 °C zu kühlen.

11. Verfahren oder Vorrichtung nach einem der vorhergehenden Ansprüche, wobei die Kavität (15) derart mit dem Thermoöl (17) beaufschlagt wird, dass das Thermoöl (17) (17) auf die gesamte Trennmembran (14a) mit dem Druck ≥ 20 bar, ≥ 30 bar oder ≥ 40 bar einwirkt, und/oder wobei beim Kühlen des Thermoöls (17) der Druck auf die Trennmembran (14a) weiterhin Umgebungsdruck, ≥ 20 bar, ≥ 30 bar oder ≥ 40 bar ist.

12. Verfahren oder Vorrichtung nach einem der vorhergehenden Ansprüche, wobei die Kavität (15) zwischen der Außenform (8) und der Trennmembran (14a) entlang der Mantelfläche (14) eine Dicke von ≥ 1 mm und ≤ 10 mm, insbesondere ≥ 2 mm und ≤ 5 mm, aufweist und/oder die Kavität (15) an jeder Stelle der Trennmembran (14a) eine gleich große Dicke aufweist.

13. Verfahren oder Vorrichtung nach einem der vorhergehenden Ansprüche, wobei die mit der Matrix imprägnierten Faser (1) eine vorkonsolidierte Halbzeugschale und/oder vorkonsolidierte Einzellagen umfasst.

14. Verfahren oder Vorrichtung nach einem der vorhergehenden Ansprüche, wobei die Innenform (7) und/oder die Außenform (8) eine Zylinderhöhe von ≥ 10 m und ≤ 50 m, insbesondere ≥ 10 m und ≤ 15 m, und/oder einen Zylinderdurchmesser von ≥ 3 m und ≤ 10 m, insbesondere 6 m, aufweist.

15. Verfahren oder Vorrichtung nach einem der vorhergehenden Ansprüche, wobei die Innenform (7) und/oder die Außenform (8) ausgebildet ist, einen Flugzeugrumpf, einen Flugzeugflügel oder einen Flugzeugpropeller auszuformen.

## Claims

1. Method for producing a component (1) from a fiber composite material, comprising the steps:
introducing a fiber (1) impregnated with a matrix onto a cylindrical inner mold (7) of a mold space formed between the inner mold (7) and a cylindrical outer mold (8), wherein the inner mold (7) and/or the outer mold (8) is formed of invar;
introducing a separating membrane (14a) on the fiber impregnated with the matrix (1) such that a cavity (15) extending along the lateral surface (14) of the outer mold (8) is formed between the outer mold (8) and the separating membrane (14a); and
exposing the cavity (15) to a thermal oil (17) with a temperature greater than the melting point of the matrix and with a pressure greater than ambient pressure such that the thermal oil (17) acts on the separating membrane (14a) with the pressure.

2. Method according to the preceding claim, comprising the step:
exposing the cavity (15) to the thermal oil (17) with the temperature ≥ 250°C, ≥ 300°C or ≥ 400°C, such that the thermal oil (17) with the pressure ≥ 20 bar, ≥ 30 bar or ≥ 40 bar acts on the separating membrane (14a); and/or
cooling the thermal oil (17) to a temperature of ≤ 150°C, ≤ 200°C or ≤ 250°C after a predetermined period of time.

3. Method according to any one of the preceding claims, comprising the step
preheating the outer mold (8) and/or the inner mold (7) to a basic temperature, in particular prior to introducing the fiber (1) impregnated with the matrix; and/or
applying negative pressure to the lateral surface (12) of the inner mold (7).

4. Method according to any one of the preceding claims, comprising the step of introducing a stringer (22), a frame and/or a thickening (23) into a recess in the inner mold (7), in particular prior to introducing the fiber impregnated with the matrix (1).

5. Method according to any one of the preceding claims with the step of cooling the inner mold (7) to a temperature of ≤ 150°C, ≤ 200°C or ≤ 250°C or according to a method according to the preceding claim with the step of cooling the inner mold (7) to a temperature of ≤ 150°C, ≤ 200°C or ≤ 250°C in the area of the stringer (22), the frame and/or the thickening (23).

6. Method according to any one of the preceding claims, wherein the separating membrane (14a) is made of metal and/or is attached to the outer mold (8).

7. Method according to any one of the preceding claims, comprising the step
inserting a separating film (13) between the fiber impregnated with the matrix (1) and the separating membrane (14a); and/or
applying, in particular, spraying a release agent (11) onto the inner mold (7) and/or the outer mold (8) prior to introducing the fiber (1) impregnated with the matrix.

8. Method according to any one of the preceding claims, comprising a press which includes the inner mold (7) and the outer mold (8), in particular a C-frame press (6), and/or the step after introducing the separating membrane (14a) of tensioning the inner mold (7) and the outer mold (8) against each other until the cavity (15) is formed.

9. Device for producing a component (1) from a fiber composite material, including
a cylindrical inner mold (7) onto which a fiber (1) impregnated with a matrix is applied;
a separating membrane (14a), which is applied onto the fiber (1) impregnated with the matrix;
a cylindrical outer mold (8), which rests on the inner mold (7) comprising the fiber impregnated with the matrix (1) applied thereto and the separating membrane (14a) in such a sealing manner, that a cavity (15) is formed along the lateral surface (14) of the outer mold (8); and
a thermal oil tempering and pressurization device (16), which is configured to expose the cavity (15) to a thermal oil (17) with a temperature greater than the melting point of the matrix and with a pressure greater than ambient pressure such that the thermal oil (17) acts with the pressure on the separating membrane (14a),
wherein the inner mold (7) and/or the outer mold (8) is made of invar.

10. Device according to the preceding claim, wherein the thermal oil tempering and pressurization device (16) is configured to expose the cavity (15) to the thermal oil (17) with the temperature ≥ 250°C ≥ 300°C or ≥ 400°C such that the thermal oil (17) acts on the separating membrane (14a) at a pressure of ≥ 20 bar, ≥ 30 bar or ≥ 40 bar, and/or after a predetermined period of time to cool the thermal oil (17) to a temperature of ≤ 150°C, ≤ 200°C or ≤ 250°C.

11. Method or device according to any one of the preceding claims, wherein the cavity (15) is exposed to the thermal oil (17) such that the thermal oil (17) acts on the entire separating membrane (14a) at a pressure of ≥ 20 bar, ≥ 30 bar or ≥ 40 bar, and/or wherein in cooling the thermal oil (17) the pressure acting on the separating membrane (14a) continues to be ambient pressure of ≥ 20 bar, ≥ 30 bar or ≥ 40 bar.

12. Method or device according to any one of the preceding claims, wherein the cavity (15) has a thickness of ≥ 1 mm and ≤ 10 mm, in particular ≥ 2 mm and ≤ 5 mm between the outer mold (8) and the separating membrane (14a) along the lateral surface (14), and/or the cavity (15) has the same thickness at any point of the separating membrane (14a).

13. Method or device according to any one of the preceding claims, wherein the fiber (1) impregnated with the matrix comprises a pre-consolidated semi-finished shell and/or pre-consolidated individual layers.

14. Method or device according to any one of the preceding claims, wherein the inner mold (7) and/or the outer mold (8) has a cylinder height of ≥ 10 m and ≤ 50 m, in particular ≥ 10 m and ≤ 15 m, and/or a cylinder diameter of ≥ 3 m and ≤ 10 m, in particular 6 m.

15. Method or device according to any one of the preceding claims, wherein the inner mold (7) and/or the outer mold (8) is configured to form an aircraft fuselage, an aircraft wing or an aircraft propeller.

## Revendications

1. Procédé de fabrication d'un composant (1) à base d'un matériau composite de fibres, avec les étapes :
d'incorporation d'une fibre (1) imprégnée avec une matrice sur un moule intérieur (7) de forme cylindrique d'un espace de moule formé entre le moule intérieur (7) et un moule extérieur (8) en forme de cylindre, le moule intérieur (7) et/ou le moule extérieur (8) étant conçus en Invar,
d'incorporation d'une membrane de séparation (14a) sur la fibre (1) imprégnée avec la matrice de sorte qu'il se forme entre le moule extérieur (8) et la membrane de séparation (14a) une cavité (15) s'étendant le long de la surface d'enveloppe (14) du moule extérieur (8), et
de pressurisation de la cavité (15) avec une huile thermique (17) avec une température supérieure au point de fusion de la matrice et avec une pression supérieure à la pression environnante de telle sorte que l'huile thermique (17) agisse sur la membrane de séparation (14) avec la pression.

2. Procédé selon la revendication précédente, avec l'étape :
de pressurisation de la cavité (15) avec l'huile thermique (17) avec une température ≥ 250 C, ≥ 300 °C ou ≥ 400 °C, de telle sorte que l'huile thermique (17) agisse sur la membrane de séparation (14a) avec la pression ≥ 20 bar, ≥ 30 bar ou ≥ 40 bar, et/ou
de refroidissement de l'huile thermique (17), après un intervalle de temps prédéfini, à une température ≤ 150 °C, ≤ 200 °C ou ≤ 250 °C.

3. Procédé selon l'une des revendications précédentes, avec l'étape
de préchauffage du moule extérieur (8) et/ou du moule intérieur (7) à une température de base, en particulier avant l'incorporation de la fibre (1) imprégnée avec la matrice, et/ou
de dépressurisation de la surface d'enveloppe (12) du moule intérieur (7) avec une pression négative.

4. Procédé selon l'une des revendications précédentes, avec l'étape d'incorporation d'une chaîne (22), d'une trame et/ou d'un épaississement -23) dans un évidement du moule intérieur (7), en particulier avant l'incorporation de la fibre (1) imprégnée avec la matrice.

5. Procédé selon l'une des revendications précédentes, avec l'étape de refroidissement du moule intérieur (7) à une température ≤ 150 °C, ≤ 200 °C, ou ≤ 250 °C, ou après un procédé selon la revendication précédente avec l'étape de refroidissement du moule intérieur (7) à une température ≤ 150 °C, ≤ 200 °C, ou ≤ 250 °C dans la région de la chaîne (22), de la trame et/ou de l'épaississement (23).

6. Procédé selon l'une des revendications précédentes, dans lequel la membrane de séparation (14a) est conçue en métal et/ou est fixée sur le moule extérieur (8).

7. Procédé selon l'une des revendications précédentes, avec l'étape
d'incorporation d'un film de séparation (13) entre la fibre (1) imprégnée avec la matrice et la membrane de séparation (14a), et/ou
de dépôt, en particulier de pulvérisation, d'un produit de séparation (11) sur le moule intérieur (7) et/ou le moule extérieur (8) avant l'incorporation de la fibre (1) imprégnée avec la matrice.

8. Procédé selon l'une des revendications précédentes, avec une presse, en particulier une presse à cadre en C (6), présentant le moule intérieur (7) et le moule extérieur(8), et/ou l'étape, après l'incorporation de la membrane de séparation (14a), de mise sous contrainte du moule intérieur (7) et du moule extérieur (8) l'un contre l'autre jusqu'à ce que la cavité (15) soit formée.

9. Dispositif pour la fabrication d'un composant (1) à base d'un matériau composite de fibres avec
un moule intérieur (7) de forme cylindrique sur lequel est rapportée une fibre (1) imprégnée avec une matrice,
une membrane de séparation (14a) qui est rapportée sur la fibre (1) imprégnée avec la matrice,
un moule extérieur (8) de forme cylindrique qui repose sur le moule intérieur (7) avec la fibre (1) imprégnée avec la matrice y étant rapportée et la membrane de séparation (14a) de manière à rendre l'ensemble étanche, de sorte qu'une cavité 15) se trouve formée le long de la surface d'enveloppe (14) du moule extérieur (8), et
un dispositif de thermostatation et de pression à huile thermique, lequel est conçu pour soumettre la cavité (15) à une température supérieure au point de fusion de la matrice avec une huile thermique (17) et à une pression supérieure à la pression de l'environnement de telle sorte que l'huile thermique (17) agisse avec la pression sur la membrane de séparation (14a), où le moule intérieur (7) et/ou le moule extérieur (8) sont conçus en Invar.

10. Dispositif selon la revendication précédente, dans lequel le dispositif de thermostatation et de pression à l'huile thermique (16) est conçu pour soumettre la cavité (15) à une température ≥ 250 °C, ≥ 300 °C ou ≥ 400 °C avec l'huile thermique (17), de telle sorte que l'huile thermique (17) agisse sur la membrane de séparation (14a) avec une pression ≥ 20 bar, ≥ 30 bar ou ≥ 40 bar, et/ou, après un intervalle de temps prédéfini, pour refroidir l'huile thermique (17) à une température ≤ 150 °C, ≤ 200 °C ou ≤ 250 °C.

11. Procédé ou dispositif selon l'une des revendications précédentes, dans lequel la cavité (15) est soumise à l'huile thermique (17) de telle manière que l'huile thermique (17) agisse sur la membrane de séparation (14a) entière avec la pression ≥ 20 bar, ≥ 30 bar ou ≥ 40 bar, et/ou dans lequel, lors du refroidissement de l'huile thermique (17), la pression sur la membrane de séparation (14a) est toujours la pression environnante, ≥ 20 bar, ≥ 30 bar ou ≥ 40 bar.

12. Procédé ou dispositif selon l'une des revendications précédentes, dans lequel la cavité (15) présente une épaisseur de ≥ 1 mm à ≤ 10 mm, en particulier de ≥ 2 mm à ≤ 5 mm entre le moule extérieur (8) et la membrane de séparation (14a) le long de la surface d'enveloppe (14), et/ou la cavité (15) présente une même épaisseur à chaque point de la membrane de séparation (14a).

13. Procédé ou dispositif selon l'une des revendications précédentes, dans lequel la fibre (1) imprégnée avec la matrice comprend une coque de semi-produit préconsolidée et/ou des couches individuelles préconsolidées.

14. Procédé ou dispositif selon l'une des revendications précédentes, dans le moule intérieur (7) et/ou le moule extérieur (8) présentent une hauteur de cylindre ≥ 10 m et ≤ 50 m, en particulier ≥ 10 m et ≤ 15 m, et/ou un diamètre de cylindre ≥ 3 m et ≤ 10 m, en particulier de 6.

15. Procédé ou dispositif selon l'une des revendications précédentes, dans lequel le moule intérieur (7) et/ou le moule extérieur (8) sont conçus pour façonner un fuselage d'avion, une aile d'avion ou une hélice d'avion.
